# EUROPEAN PATENT APPLICATION

(11) **EP 4 765 382 A1**
(43) Date of publication of application: **24.06.2026**
(21) Application number: 25864607.4
(22) Date of filing: 19.09.2025
(51) Int. Cl.: H01M 50/171, H01M 50/105, H01M 50/186, H01M 50/193, H01M 50/178, H01M 10/04

(54) **SECONDARY BATTERY AND SECONDARY BATTERY MANUFACTURING METHOD**

(30) Priority: 27.09.2024 KR 20240131778; 15.09.2025 KR 20250132063
(71) Applicant: LG Energy Solution, Ltd., Seoul 07335 (KR)
(72) Inventor: LEE, Jae Ho, Daejeon 34122 (KR); CHOI, Ji Eun, Daejeon 34122 (KR); LEE, Min Kyu, Daejeon 34122 (KR); KIM, Sang Hun, Daejeon 34122 (KR); HWANG, Ji Young, Daejeon 34122 (KR); LEE, Ji Sun, Daejeon 34122 (KR)
(74) Representative: Plasseraud IP
(86) International application number: PCT/KR2025/014655
(87) International publication number: WO 2026/071634

(57) **Abstract**

The present disclosure relates to a secondary battery and a method for manufacturing a secondary battery, and more specifically, to a secondary battery that can be repeatedly charged and discharged and a method for manufacturing the same. A secondary battery according to an embodiment of the present disclosure may include an electrode assembly; an exterior material having an internal space accommodating the electrode assembly and first and second exterior material openings allowing the internal space to communicate with the outside; a first cap sealing the first exterior material opening; a second cap sealing the second exterior material opening; and a positive electrode lead and a negative electrode lead connected to the electrode assembly and at least partially exposed to the outside by penetrating the first cap. At this time, the first cap and the second cap may be coupled to the inner surface of the exterior material, and the bonding force between the first cap and the inner surface of the exterior material may be stronger than the bonding force between the second cap and the inner surface of the exterior material.

## Description

### TECHNICAL FIELD

### CROSS-REFERENCE TO RELATED APPLICATIONS

The present application is based on and claims priority from Korean Patent Application No. 10-2024-0131778, filed on September 27, 2024 and Korean Patent Application No. 10-2025-0132063, filed on September 15, 2025, with the Korean Intellectual Property Office, the disclosure of which is incorporated herein in its entirety by reference.

### TECHNICAL FIELD

The present disclosure relates to a secondary battery and a method for manufacturing a secondary battery, and more specifically, to a secondary battery that can be repeatedly charged and discharged and a method for manufacturing the same.

### BACKGROUND ART

A secondary battery that can be repeatedly charged and discharged may be classified into a cylindrical, prismatic, and pouch-type battery depending on the shape thereof. Among them, the pouch-type secondary battery uses a sheet-shaped exterior material formed of a multilayer film including a metal layer (foil) and a resin layer coated on both surfaces of the metal layer, which may significantly reduce battery weight compared to a cylindrical or prismatic battery using a metal can.

An electrolyte may be accommodated together with an electrode assembly inside the exterior material of such a pouch-type secondary battery. At this time, residual moisture of the electrolyte or moisture infiltrated from the outside may react with the lithium salt inside the exterior material of the pouch-type secondary battery to generate hydrogen fluoride (HF), and gases such as carbon dioxide, carbon monoxide, ethylene, and methane may be generated due to decomposition of the electrolyte.

Additionally, depending on the material of the positive electrode included in the electrode assembly of the pouch-type secondary battery, hydrogen and HF may be further generated, which may cause overheating due to overcharge and internal short circuit during the process of charging and discharging the secondary battery. Accordingly, a large amount of gas may be generated inside the exterior material.

The internal pressure of the exterior material increases due to such gas, and a venting phenomenon in which the exterior material bursts due to the increased internal pressure may occur. At this time, if venting occurs in a portion of the exterior material of a surrounding pouch-type secondary battery adjacent to the electrode lead, the electrode lead may be damaged. Accordingly, there is a need for a structure capable of inducing venting in a specific direction away from the electrode lead within the secondary battery.

### DISCLOSURE

### TECHNICAL PROBLEM

The present disclosure is designed to solve the problems of the related art, and therefore the present disclosure is directed to providing a secondary battery capable of venting internal gas in a specific direction and a method for manufacturing such a secondary battery.

### TECHNICAL SOLUTION

A secondary battery according to a first embodiment of the present disclosure may include an electrode assembly; an exterior material having an internal space accommodating the electrode assembly and first and second exterior material openings allowing the internal space to communicate with the outside; a first cap sealing the first exterior material opening; a second cap sealing the second exterior material opening; and a positive electrode lead and a negative electrode lead connected to the electrode assembly and at least partially exposed to the outside by penetrating the first cap, wherein the first cap and the second cap may be coupled to the inner surface of the exterior material, and the bonding force between the first cap and the inner surface of the exterior material may be stronger than the bonding force between the second cap and the inner surface of the exterior material.

The exterior material may be formed by rolling or folding an exterior material sheet including a metal layer and a resin layer formed on both surfaces of the metal layer so that one end and the other end of the exterior material sheet meet each other.

The one end and the other end of the exterior material sheet may be bonded or fused to each other.

The secondary battery according to the first embodiment of the present disclosure may further include a pressure member pressurizing the portion of the exterior material coupled to the first cap toward the first cap.

The pressure member may include a resin cured on the outer surface of the portion of the exterior material coupled to the first cap.

The first cap may include a body portion through which the positive electrode lead and the negative electrode lead pass; and a gasket formed on the outer surface of the body portion and coupled to the exterior material.

The gasket may have a thickness of 0.5 mm or more, and the gasket may be made of a PP material.

Meanwhile, a secondary battery according to a second embodiment of the present disclosure may include an electrode assembly; an exterior material having an internal space accommodating the electrode assembly and an exterior material opening allowing the internal space to communicate with the outside; a cap sealing the exterior material opening; and a positive electrode lead and a negative electrode lead connected to the electrode assembly and at least partially exposed to the outside by penetrating the cap, wherein only one exterior material opening may be formed in the exterior material, and the cap may be coupled to the inner surface of the portion of the exterior material where the exterior material opening is formed.

The secondary battery according to the second embodiment of the present disclosure may further include a pressure member pressurizing the portion of the exterior material coupled to the cap toward the cap.

The pressure member may include a resin cured on the outer surface of the portion of the exterior material coupled to the cap.

Meanwhile, a method for manufacturing a secondary battery according to the first embodiment of the present disclosure may include a step of coupling a positive electrode lead and a negative electrode lead to an electrode assembly; a step of wrapping the electrode assembly with a sheet-shaped exterior material to form an internal space accommodating the electrode assembly and first and second exterior material openings allowing the internal space to communicate with the outside; a step of sealing the first exterior material opening with a first cap; and a step of sealing the second exterior material opening with a second cap, wherein the positive electrode lead and the negative electrode lead may be exposed to the outside by penetrating the first cap, and the sealing strength where the first cap seals the first exterior material opening may be stronger than the sealing strength where the second cap seals the second exterior material opening.

The step of sealing the first exterior material opening with the first cap may include a step of inserting the first cap into the first exterior material opening; and a step of thermally fusing the first cap to the inner surface of the exterior material.

In the step of thermally fusing the first cap to the inner surface of the exterior material, the first cap and the inner surface of the exterior material may be heated and pressurized at a temperature range of 210 to 230°C for 3 to 10 seconds.

The step of sealing the second exterior material opening with the second cap may include a step of inserting the second cap into the second exterior material opening; and a step of thermally fusing the second cap to the inner surface of the exterior material.

The step of sealing the first exterior material opening with the first cap and the step of sealing the second exterior material opening with the second cap may be performed simultaneously or sequentially.

The method for manufacturing a secondary battery according to the first embodiment of the present disclosure may further include a step of applying a curable resin to the outer surface of the portion of the exterior material coupled to the first cap, which is performed after the step of sealing the second exterior material opening with the second cap.

Meanwhile, a method for manufacturing a secondary battery according to the second embodiment of the present disclosure may include a step of coupling a positive electrode lead and a negative electrode lead to an electrode assembly; a step of wrapping the electrode assembly with a sheet-shaped exterior material to form an internal space accommodating the electrode assembly and an exterior material opening allowing the internal space to communicate with the outside; and a step of sealing the exterior material opening with a cap, wherein the positive electrode lead and the negative electrode lead may be at least partially exposed to the outside by penetrating the cap, and only one exterior material opening may be formed in the exterior material, and the cap may be coupled to the inner surface of the portion of the exterior material where the exterior material opening is formed.

The step of sealing the exterior material opening with the cap may include a step of inserting the cap into the exterior material opening; and a step of thermally fusing the cap to the inner surface of the exterior material.

In the step of thermally fusing the cap to the inner surface of the exterior material, the cap and the inner surface of the exterior material may be heated and pressurized at a temperature range of 210 to 230°C for 3 to 10 seconds.

The method for manufacturing a secondary battery according to the second embodiment of the present disclosure may further include a step of applying a curable resin to the outer surface of the portion of the exterior material coupled to the cap, which is performed after the step of sealing the exterior material opening with the cap.

### ADVANTAGEOUS EFFECTS

In the secondary battery according to an embodiment of the present disclosure, the bonding force between the first cap through which the positive electrode lead and the negative electrode lead pass and the inner surface of the exterior material is formed to be stronger than the bonding force between the second cap and the inner surface of the exterior material, which may prevent venting from occurring toward the first cap through which the positive electrode lead and the negative electrode lead pass.

### DESCRIPTION OF DRAWINGS

FIG. 1 is an exploded perspective view of a secondary battery according to a first embodiment of the present disclosure.
FIG. 2 is a plan view of a secondary battery according to a first embodiment of the present disclosure.
FIG. 3 is a perspective view showing a state in which a pressure member is coupled to a secondary battery according to a first embodiment of the present disclosure.
FIG. 4 is a cross-sectional view for describing the structure of a first cap of a secondary battery according to a first embodiment of the present disclosure.
FIG. 5 is an exploded perspective view of a secondary battery according to a second embodiment of the present disclosure.
FIG. 6 is a perspective view showing a state in which a pressure member is coupled to a secondary battery according to a second embodiment of the present disclosure.
FIG. 7 is a cross-sectional view for describing the structure of a cap of a secondary battery according to a second embodiment of the present disclosure.
FIG. 8 is a flowchart sequentially showing a method for manufacturing a secondary battery according to a first embodiment of the present disclosure.
FIG. 9 is a flowchart detailing a step in which a first cap is coupled to an exterior material in a method for manufacturing a secondary battery according to a first embodiment of the present disclosure.
FIG. 10 is a flowchart detailing a step in which a second cap is coupled to an exterior material in a method for manufacturing a secondary battery according to a first embodiment of the present disclosure.
FIG. 11 is a flowchart sequentially showing a method for manufacturing a secondary battery according to a second embodiment of the present disclosure.

### BEST MODE

Hereinafter, preferred embodiments of the present disclosure will be described in sufficient detail with reference to the accompanying drawings to enable those having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the present disclosure.

Additionally, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

Hereinafter, a secondary battery and a method for manufacturing a secondary battery according to the present disclosure will be described with reference to the drawings.

### Secondary battery

### First embodiment

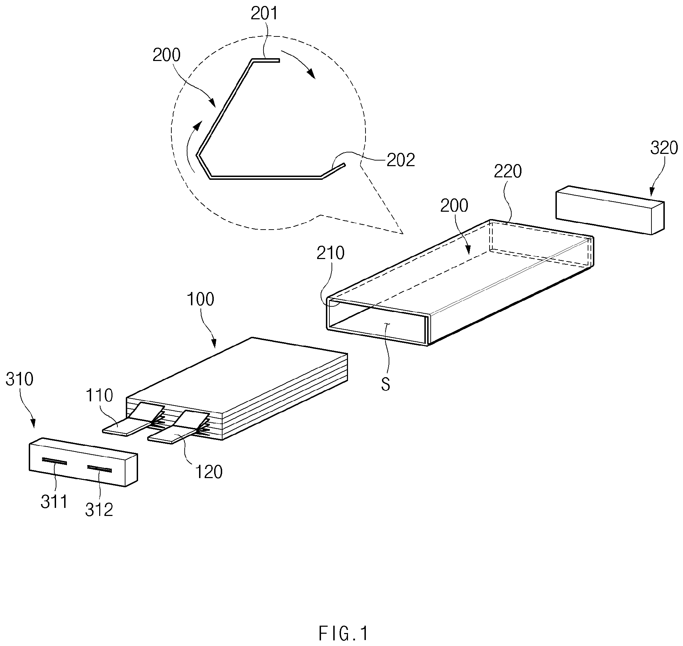

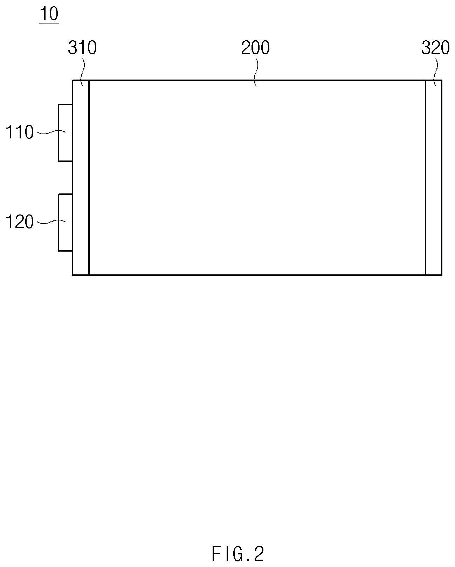

FIG. 1 is an exploded perspective view of a secondary battery according to a first embodiment of the present disclosure, and FIG. 2 is a plan view of a secondary battery according to a first embodiment of the present disclosure.

Referring to FIGS. 1 and 2, a secondary battery 10 according to the first embodiment of the present disclosure may include an electrode assembly 100; an exterior material 200 having an internal space S accommodating the electrode assembly 100 and first and second exterior material openings 210, 220 allowing the internal space S to communicate with the outside; a first cap 310 sealing the first exterior material opening 210; a second cap 320 sealing the second exterior material opening 220; and a positive electrode lead 110 and a negative electrode lead 120 connected to the electrode assembly 100 and exposed to the outside by penetrating the first cap 310. At this time, the first cap 310 and the second cap 320 may be coupled to the inner surface of the exterior material 200, and the bonding force between the first cap 310 and the inner surface of the exterior material 200 may be stronger than the bonding force between the second cap 320 and the inner surface of the exterior material 200.

In this case, the bonding force between the first cap 310 through which the positive electrode lead 110 and the negative electrode lead 120 pass and the inner surface of the exterior material 200 is formed to be stronger than the bonding force between the second cap 320 positioned on the opposite side of the first cap 310 and the inner surface of the exterior material 200, so that when the internal pressure of the secondary battery 10 increases, the coupling between the second cap 320 and the inner surface of the exterior material 200 may be preferentially released. That is, venting may be prevented from occurring toward the first cap 310 through which the positive electrode lead 110 and the negative electrode lead 120 pass, and thus it is possible to prevent the positive electrode lead 110 and the negative electrode lead 120 from being damaged even when venting occurs in the secondary battery 10.

The secondary battery 10 may have a form in which the electrode assembly 100 is accommodated inside the exterior material 200. For example, the secondary battery 10 according to the present disclosure may refer to a pouch-type secondary battery among various types of secondary batteries that can be charged and discharged. This is merely one example, and the shape of the secondary battery 10 may vary.

The electrode assembly 100 may include a positive electrode, a negative electrode, and a separator. Here, the separator may be disposed between the positive electrode and the negative electrode to physically separate the positive electrode and the negative electrode. The electrode assembly 100 may be in a stacked form where a positive electrode, a negative electrode, and a separator are laminated, or in a jelly-roll form where a positive electrode, a negative electrode, and a separator are wound.

The electrode assembly 100 may include one or more positive electrodes and one or more negative electrodes, and the positive electrode of the electrode assembly 100 may be connected to the positive electrode lead 110, and the negative electrode of the electrode assembly 100 may be connected to the negative electrode lead 120. At this time, the positive electrode lead 110 and the negative electrode lead 120 may be formed on one side of the electrode assembly 100. That is, the electrode assembly 100 may be a unidirectional cell in which the positive electrode lead 110 and the negative electrode lead 120 are formed in the same direction.

The exterior material 200 is formed by winding a sheet-shaped exterior material in one direction, and an internal space S for accommodating the electrode assembly 100 may be formed inside the wound exterior material sheet. Additionally, both sides of the internal space S may communicate with the outside.

Specifically, the sheet-shaped exterior material 200 is a sheet having one end 201 and the other end 202 spaced apart from the one end 201 in a predetermined direction, and the exterior material 200 may be formed by rolling or folding the exterior material sheet so that the one end 201 and the other end 202 meet. The one end 201 and the other end 202 of the exterior material sheet may be coupled to each other in various ways. For example, the one end 201 and the other end 202 may be bonded with an adhesive, or the one end 201 and the other end 202 may be thermally fused to each other by heat and pressure.

The one end 201 of the exterior material sheet may be coupled to the inner surface or the outer surface of the other end 202. As illustrated in FIG. 1, the outer surface of the one end 201 of the exterior material sheet may be coupled to the inner surface of the other end 202. Additionally, the inner surface of the one end 201 of the exterior material sheet may be coupled to the inner surface of the other end 202.

Meanwhile, the exterior material sheet may be a laminate sheet including a metal layer such as aluminum or stainless steel. At this time, a resin layer may be formed on each of an outer surface and an inner surface of the metal layer.

The metal layer may serve as a substrate that maintains mechanical strength and a barrier layer that prevents the penetration of moisture and oxygen. The metal layer may be composed of aluminum or an aluminum alloy so as to exhibit the function of improving the strength of the battery case in addition to the function of preventing the inflow or leakage of foreign substances such as gas and moisture. The aluminum alloy may include alloy numbers 8079, 1N30, 8021, 3003, 3004, 3005, 3104, 3105, and the like, which may be used alone or in combination of two or more.

The first resin layer coated on the outer surface of the metal layer should have excellent resistance to the external environment in order to protect the electrode assembly from the outside, and thus the first resin layer is required to have excellent tensile strength and durability relative to its thickness. Materials for the first resin layer may include a polyester-based resin such as polyethylene terephthalate (PET) and polyethylene naphthalate (PEN), a polyolefin-based resin such as polyethylene and polypropylene, and the like.

The second resin layer coated on the inner surface of the metal layer may be coupled to first and second caps 310, 320 to be described later to seal the internal space S, and the second resin layer may be composed of a polyolefin-based resin. For example, materials for the second resin layer may include casted polypropylene (CPP), chlorinated polypropylene, polyethylene, ethylene propylene copolymer, polyethylene and acrylic acid copolymer, polypropylene and acrylic acid copolymer, and the like.

Conventionally, a pouch-type secondary battery was manufactured by molding a cup portion on a pouch film, inserting an electrode assembly into the cup portion, and then sealing the pouch film in which the cup portion is molded with another pouch film. However, the molding depth of the cup portion was limited due to the material properties of the pouch film, and thus it was impossible to mold the cup portion deeply to increase the capacity of the secondary battery. Additionally, there was a problem that the thickness of the pouch film became thinner during the molding process of the cup portion, causing defects such as cracks in the pouch film.

On the other hand, since the exterior material 200 of the secondary battery 10 according to the first embodiment of the present disclosure is prepared by rolling or folding the exterior material sheet, the electrode assembly 100 may be accommodated in the internal space S of the exterior material 200 without molding a separate cup portion. In this case, the conventional limitation due to the formation of the cup portion in the exterior material is not applied, so that the capacity of the secondary battery 10 may be easily increased by increasing the size of the internal space S. Additionally, the exterior material 200 prepared by rolling or folding the exterior material sheet is not formed with a portion that decreases in thickness, and thus the occurrence of defects such as cracks in the exterior material 200 may be prevented.

For reference, the secondary battery 10 according to the first embodiment of the present disclosure may be formed by seating the electrode assembly 100 on the upper surface of the exterior material sheet in an unfolded state and then rolling or folding the exterior material sheet. Additionally, the secondary battery 10 according to the first embodiment of the present disclosure may be formed by rolling or folding the exterior material sheet to form the internal space S and the exterior material openings 210, 220 and then inserting the electrode assembly 100 into the exterior material openings 210, 220. In both of the above cases, the electrode assembly 100 may be accommodated inside the exterior material 200 without molding a separate cup portion.

The first cap 310 and the second cap 320 may be members that are coupled to the exterior material 200 and block the first and second exterior material openings 210, 220. The internal space S of the exterior material 200 in which the electrode assembly 100 is accommodated may be filled with an electrolyte, and the first and second caps 310, 320 may seal the internal space S to prevent the electrolyte from leaking to the outside.

Specifically, the first cap 310 may be inserted into the first exterior material opening 210 and then coupled to the inner surface of the exterior material 200 to seal the first exterior material opening 210. The second cap 320 may be inserted into the second exterior material opening 220 and then coupled to the inner surface of the exterior material 200 to seal the second exterior material opening 220. Here, the inner surface of the exterior material 200 to which the first and second caps 310, 320 are coupled may be the second resin layer described above. Additionally, the first and second caps 310, 320 may be coupled to the inner surface of the exterior material 200 at one side and the other side of the internal space S, respectively.

The length of the portion of the first and second caps 310, 320 inserted into the exterior material 200 may be formed variously. For example, as illustrated in FIG. 2, only a portion of the first and second caps 310, 320 may be inserted into the exterior material 200, and the remaining portions of the first and second caps 310, 320 may be exposed to the outside of the exterior material 200. Additionally, although not illustrated in FIG. 2, the first and second caps 310, 320 may be entirely inserted into the exterior material 200.

The first and second caps 310, 320 may be made of a material that is not easily permeable to moisture in order to seal the internal space S of the exterior material 200 by being coupled to the inner surface of the exterior material 200. For example, the first and second caps 310, 320 may be obtained from metal or resin, or may be obtained from a laminate sheet having a resin layer formed on both surfaces of a metal layer.

Meanwhile, the secondary battery 10 may generate gas as it is repeatedly charged and discharged, and thus the pressure inside the exterior material 200 may increase. If the pressure inside the exterior material 200 increases excessively, venting or the like may occur, thereby causing the secondary battery 10 to lose its function.

Specifically, an electrolyte may be accommodated together with the electrode assembly 100 inside the exterior material 200 of the secondary battery 10. At this time, residual moisture of the electrolyte or moisture infiltrated from the outside may react with the lithium salt inside the exterior material 200 of the secondary battery 10 to generate HF, and gases such as carbon dioxide, carbon monoxide, ethylene, and methane may be generated due to decomposition of the electrolyte.

Additionally, depending on the material of the positive electrode included in the electrode assembly 100 of the secondary battery 10, hydrogen and HF may be additionally generated, which may cause overheating due to overcharge and internal short circuit during the charging and discharging process. Accordingly, a large amount of gas may be generated inside the exterior material 200. The pressure inside the exterior material may increase due to such gas, and the increased pressure may cause a swelling phenomenon in which the exterior material 200 swells or a venting phenomenon in which a portion of the exterior material 200 bursts.

The secondary battery 10 according to the first embodiment of the present disclosure may have a feature for inducing venting in a specific direction when the internal pressure increases. Specifically, the bonding force between the first cap 310 and the inner surface of the exterior material 200 may be stronger than the bonding force between the second cap 320 and the inner surface of the exterior material 200.

In this case, the first cap 310 through which the positive electrode lead 110 and the negative electrode lead 120 pass and the inner surface of the exterior material 200 are strongly coupled, so that the coupling between the first cap 310 and the exterior material 200 may not be released even when the internal pressure of the secondary battery 10 increases. On the other hand, the second cap 320 provided on the opposite side of the first cap 310 and the inner surface of the exterior material 200 are relatively weakly coupled, so that the coupling between the second cap 320 and the inner surface of the exterior material 200 may be easily released when the internal pressure of the secondary battery 10 increases.

That is, when the internal pressure of the secondary battery 10 increases, a venting phenomenon occurs at the portion where the second cap 320 is coupled, and thus a venting phenomenon may be induced toward the opposite side of the positive electrode and negative electrode leads 110, 120. In this case, there is an advantageous effect of preventing damage to the positive electrode and negative electrode leads 110, 120 even when the internal pressure of the secondary battery 10 increases.

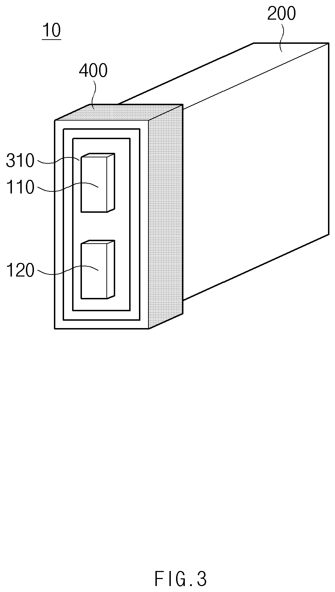

Meanwhile, FIG. 3 is a perspective view showing a state in which a pressure member is coupled to a secondary battery according to a first embodiment of the present disclosure.

FIG. 3 illustrates a state in which the pressure member 400 pressurizing the portion of the exterior material 200 coupled to the first cap 310 toward the first cap 310 is provided in the secondary battery 10 according to the first embodiment of the present disclosure. When the pressure member 400 is provided in the secondary battery 10, an inward pressing force is applied to the outer sides of the exterior material 200 and the first cap 310, and thus there is an advantageous effect of preventing the coupling between the exterior material 200 and the first cap 310 from being released even when the internal pressure of the secondary battery 10 increases. When the pressure member 400 is provided, the bonding force between the first cap 310 and the inner surface of the exterior material 200 may be formed in various ways. For example, the bonding force between the first cap 310 and the inner surface of the exterior material 200 may be greater than or equal to 500 kPa.

The pressure member 400 may be configured in various ways. For example, the pressure member 400 may be a curable resin applied to the outer surface of the portion of the exterior material 200 coupled to the first cap 310. Additionally, the pressure member 400 is made of a metal material, and may be fitted onto the outer surface of the portion of the exterior material 200 coupled to the first cap 310.

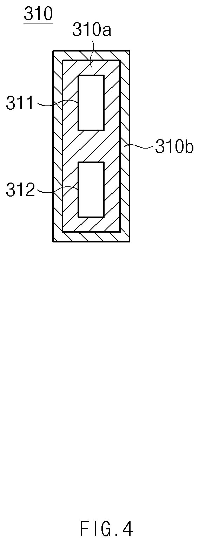

Meanwhile, FIG. 4 is a cross-sectional view for describing the structure of a first cap of a secondary battery according to a first embodiment of the present disclosure.

Referring to FIG. 4, the first cap 310 may include a body portion 310a through which the positive electrode lead 110 and the negative electrode lead 120 pass; and a gasket 310b formed on the outer surface of the body portion 310a and coupled to the exterior material 200.

The body portion 310a may have first and second through holes 311, 312 through which the positive electrode lead 110 and the negative electrode lead 120 pass. A sealing member may be inserted between these through holes 311, 312 and the electrode leads 110, 120.

The gasket 310b is a member surrounding the body portion 310a, is made of a PP material, and may be fused to the body portion 310a and the inner surface of the exterior material 200, respectively. At this time, the gasket 310b may have a thick thickness of 0.5 mm or more, and in this case, the gasket 310b is sufficiently fused to the body portion 310a and the inner surface of the exterior material 200, thereby improving the bonding force between the first cap 310 and the exterior material 200. Specifically, the gasket 310b may have a thickness of 0.5 mm or more and 1 mm or less. When the gasket 310b is made of a PP material having a thickness of 0.5 mm or more, the bonding force between the first cap 310 and the inner surface of the exterior material 200 may be formed in various ways. For example, the bonding force between the first cap 310 and the inner surface of the exterior material 200 may be greater than or equal to 500 kPa.

### Second embodiment

A secondary battery according to the second embodiment of the present disclosure differs from the first embodiment in that only one cap is coupled to the exterior material. Contents common to the first embodiment will be omitted as much as possible, and the second embodiment will be described focusing on the differences. That is, it is obvious that contents not described in the second embodiment may be regarded as contents of the first embodiment, if necessary.

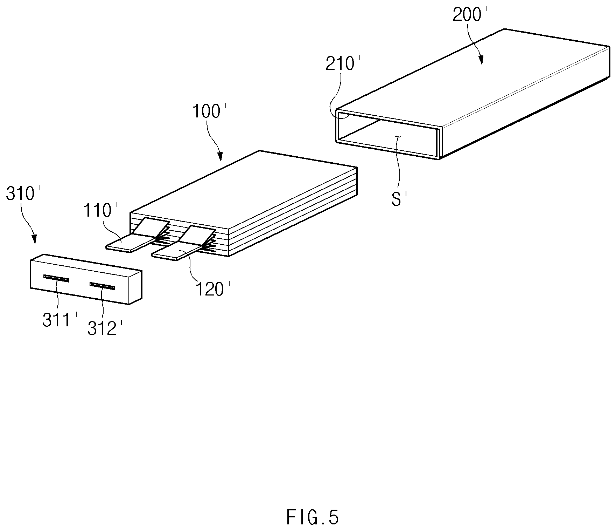

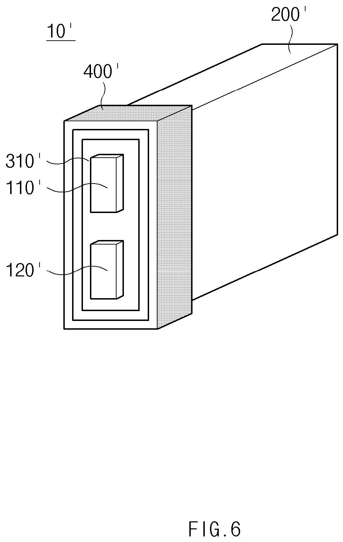

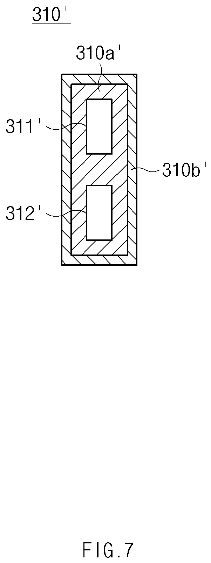

FIG. 5 is an exploded perspective view of a secondary battery according to a second embodiment of the present disclosure. FIG. 6 is a perspective view showing a state in which a pressure member is coupled to a secondary battery according to a second embodiment of the present disclosure. FIG. 7 is a cross-sectional view for describing the structure of a cap of a secondary battery according to a second embodiment of the present disclosure.

Referring to FIGS. 5 to 7, a secondary battery 10' according to the second embodiment of the present disclosure may include an electrode assembly 100'; an exterior material 200' having an internal space S' accommodating the electrode assembly 100' and an exterior material opening 210' allowing the internal space S' to communicate with the outside; a cap 310' sealing the exterior material opening 210'; and a positive electrode lead 110' and a negative electrode lead 120' connected to the electrode assembly 100' and at least partially exposed to the outside by penetrating the cap 310'. At this time, only one exterior material opening 210' may be formed in the exterior material 200', and the cap 310' may be coupled to the inner surface of the portion of the exterior material 200' where the exterior material opening 210' is formed.

In this case, the bonding force between the cap 310' through which the positive electrode lead 110' and the negative electrode lead 120' pass and the inner surface of the exterior material 200' may be greater than or equal to 500 kPa. When the internal pressure of the exterior material 200' is greater than or equal to 500 kPa, the exterior material 200' formed of a laminate sheet may be broken, and since the bonding force between the cap 310' and the inner surface of the exterior material 200' is greater than or equal to 500 kPa, the coupling between the cap 310' and the exterior material 200' may not be released until the exterior material 200' is broken.

That is, according to the secondary battery 10' according to the second embodiment of the present disclosure, venting may be prevented from occurring toward the cap 310' through which the positive electrode lead 110' and the negative electrode lead 120' pass, and thus it is possible to prevent the positive electrode lead 110' and the negative electrode lead 120' from being damaged even when venting occurs in the secondary battery 10'.

The cap 310' may be a member that is coupled to the exterior material 200' and blocks the exterior material opening 210'. The internal space S' of the exterior material 200' in which the electrode assembly 100' is accommodated may be filled with an electrolyte, and the cap 310' may seal the internal space S' to prevent the electrolyte from leaking to the outside.

Specifically, the cap 310' may be inserted into the exterior material opening 210' and then coupled to the inner surface of the exterior material 200' to seal the exterior material opening 210'. Here, the inner surface of the exterior material 200' to which the cap 310' is coupled may be the second resin layer described above in the secondary battery according to the first embodiment. Additionally, the cap 310' may be coupled to the inner surface of the exterior material 200' at one side of the internal space S'.

At this time, the length of the portion of the cap 310' inserted into the exterior material 200' may be formed variously. For example, only a portion of the cap 310' may be inserted into the exterior material 200', and the remaining portions of the cap 310' may be exposed to the outside of the exterior material 200'. Additionally, the cap 310' may be entirely inserted into the exterior material 200'.

Meanwhile, the cap 310' may be made of a material that is not easily permeable to moisture in order to seal the internal space S' of the exterior material 200' by being coupled to the inner surface of the exterior material 200'. For example, the cap 310' may be obtained from metal or resin, or may be obtained from a laminate sheet having a resin layer formed on both surfaces of a metal layer.

The cap 310' may include a body portion 310a' through which the positive electrode lead 110' and the negative electrode lead 120' pass; and a gasket 310b' formed on the outer surface of the body portion 310a' and coupled to the exterior material 200'. The body portion 310a' may have first and second through holes 311', 312' through which the positive electrode lead 110' and the negative electrode lead 120' pass. A sealing member may be inserted between these through holes 311', 312' and the electrode leads 110', 120'.

The gasket 310b' is a member surrounding the body portion 310a', is made of a PP material, and may be fused to the body portion 310a' and the inner surface of the exterior material 200', respectively. At this time, the gasket 310b' may have a thickness of 0.5 mm or more. Specifically, the gasket 310b' may have a thickness of 0.5 mm or more and 1 mm or less. In this case, the gasket 310b' is sufficiently fused to the body portion 310a' and the inner surface of the exterior material 200', thereby improving the bonding force between the first cap 310' and the exterior material 200'.

Meanwhile, the secondary battery 10' according to the second embodiment of the present disclosure may further include a pressure member 400' pressurizing the portion of the exterior material 200' coupled to the cap 310' toward the cap 310'. When the pressure member 400' is provided in the secondary battery 10', an inward pressing force is applied to the outer sides of the exterior material 200' and the cap 310', thereby preventing the coupling between the exterior material 200' and the cap 310' from being released even when the internal pressure of the secondary battery 10' increases.

The pressure member 400' may be configured in various ways. For example, the pressure member 400' may be a curable resin applied to the outer surface of the portion of the exterior material 200' coupled to the cap 310'. Additionally, the pressure member 400' is made of a metal material, and may be fitted onto the outer surface of the portion of the exterior material 200' coupled to the cap 310'.

### Method for manufacturing secondary battery

### First embodiment

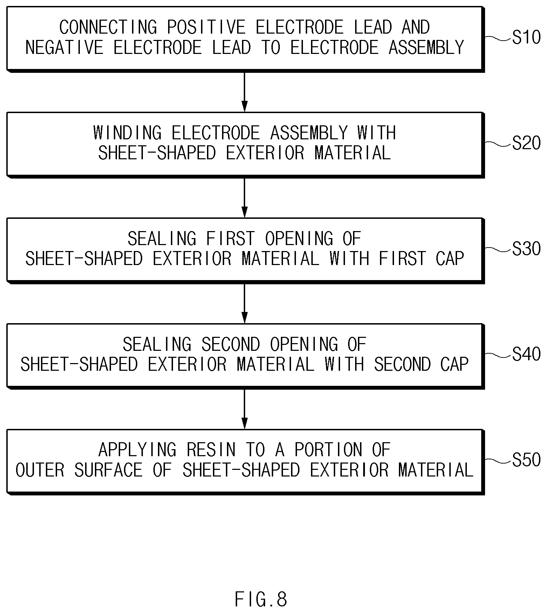

FIG. 8 is a flowchart sequentially showing a method for manufacturing a secondary battery according to a first embodiment of the present disclosure.

Referring to FIG. 8, a method for manufacturing a secondary battery according to the first embodiment of the present disclosure may include a step (S10) of coupling a positive electrode lead 110 and a negative electrode lead 120 to an electrode assembly 100; a step (S20) of wrapping the electrode assembly 100 with a sheet-shaped exterior material 200 to form an internal space S accommodating the electrode assembly 100 and first and second exterior material openings 210, 220 allowing the internal space S to communicate with the outside; a step (S30) of sealing the first exterior material opening 210 with a first cap 310; and a step (S40) of sealing the second exterior material opening 220 with a second cap 320. At this time, the positive electrode lead 110 and the negative electrode lead 120 may be exposed to the outside by penetrating the first cap 310, and the sealing strength where the first cap 310 seals the first exterior material opening 210 may be stronger than the sealing strength where the second cap 320 seals the second exterior material opening 220.

In this case, the bonding force between the first cap 310 through which the positive electrode lead 110 and the negative electrode lead 120 pass and the inner surface of the exterior material 200 is formed to be stronger than the bonding force between the second cap 320 positioned on the opposite side of the first cap 310 and the inner surface of the exterior material 200, so that when the internal pressure of the secondary battery 10 increases, the coupling between the second cap 320 and the inner surface of the exterior material 200 may be preferentially released. That is, venting may be prevented from occurring toward the first cap 310 through which the positive electrode lead 110 and the negative electrode lead 120 pass, and thus it is possible to prevent the positive electrode lead 110 and the negative electrode lead 120 from being damaged even when venting occurs in the secondary battery 10.

That is, according to the method for manufacturing a secondary battery according to the first embodiment of the present disclosure, there is provided the secondary battery 10 capable of preventing the positive electrode lead 110 and the negative electrode lead 120 from being damaged even when venting occurs.

The step (S10) of coupling the positive electrode lead 110 and the negative electrode lead 120 to the electrode assembly 100 may be a step of connecting the positive electrode lead 110 to the positive electrode of the electrode assembly 100 and connecting the negative electrode lead 120 to the negative electrode of the electrode assembly 100. Specifically, after welding the positive electrode uncoated portions of the electrode assembly 100, the positive electrode lead 110 may be connected to this positive electrode tab bundle, and after welding the negative electrode uncoated portions of the electrode assembly 100, the negative electrode lead 120 may be connected to this negative electrode tab bundle.

In the step (S10) of coupling the positive electrode lead 110 and the negative electrode lead 120 to the electrode assembly 100, the positive electrode lead 110 and the negative electrode lead 120 may be connected to one side of the electrode assembly 100. That is, the electrode assembly 100 where the positive electrode lead 110 and the negative electrode lead 120 are coupled may be a unidirectional cell.

The step (S20) of wrapping the electrode assembly 100 with a sheet-shaped exterior material 200 to form an internal space S accommodating the electrode assembly 100 and first and second exterior material openings 210, 220 allowing the internal space S to communicate with the outside may be a step of winding the sheet-shaped exterior material in one direction and coupling one end 201 and the other end 202 of this exterior material.

Specifically, the sheet-shaped exterior material 200 is a sheet having one end 201 and the other end 202 spaced apart from the one end 201 in a predetermined direction, and the exterior material 200 may be formed by rolling or folding the exterior material sheet so that the one end 201 and the other end 202 meet. The one end 201 and the other end 202 of the exterior material sheet may be coupled to each other in various ways. For example, the one end 201 and the other end 202 may be bonded with an adhesive, or the one end 201 and the other end 202 may be thermally fused to each other by heat and pressure.

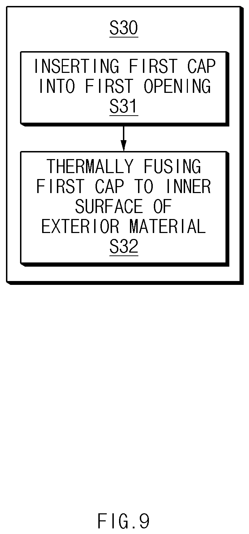

FIG. 9 is a flowchart detailing a step in which a first cap is coupled to an exterior material in a method for manufacturing a secondary battery according to a first embodiment of the present disclosure.

Referring to FIG. 9, the step (S30) of sealing the first exterior material opening 210 with the first cap 310 may include a step (S31) of inserting the first cap 310 into the first exterior material opening 210 and a step (S32) of thermally fusing the first cap 310 to the inner surface of the exterior material 200.

In the step (S32) of thermally fusing the first cap 310 to the inner surface of the exterior material 200, the first cap 310 and the inner surface of the exterior material 200 may be heated and pressurized at a temperature range of 210 to 230°C for 3 to 10 seconds. The first cap 310 and the inner surface of the exterior material 200 may be heated and pressurized in various ways. For example, the first cap 310 and the inner surface of the exterior material 200 may be heated and pressurized using a high-temperature jig. When the first cap 310 and the inner surface of the exterior material 200 may be heated and pressurized at a temperature range of 210 to 230°C for 3 to 10 seconds, the bonding force between the first cap 310 and the inner surface of the exterior material 200 may be formed in various ways. For example, the bonding force between the first cap 310 and the inner surface of the exterior material 200 may be greater than or equal to 500 kPa.

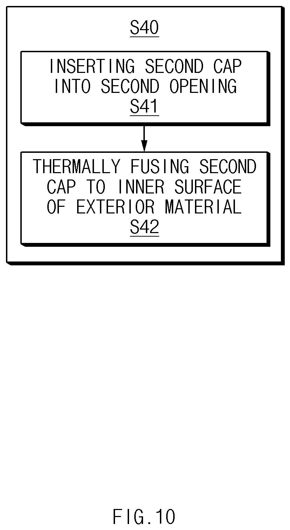

FIG. 10 is a flowchart detailing a step in which a second cap is coupled to an exterior material in a method for manufacturing a secondary battery according to a first embodiment of the present disclosure.

Referring to FIG. 10, the step (S40) of sealing the second exterior material opening 220 with the second cap 320 may include a step (S41) of inserting the second cap 320 into the second exterior material opening 220 and a step (S42) of thermally fusing the second cap 320 to the inner surface of the exterior material 200.

In the step (S42) of thermally fusing the second cap 320 to the inner surface of the exterior material 200, the second cap 320 and the inner surface of the exterior material 200 may be heated and pressurized in various ways. For example, the second cap 320 and the inner surface of the exterior material 200 may be heated and pressurized using a high-temperature jig.

In the step (S42) of thermally fusing the second cap 320 to the inner surface of the exterior material 200, the total amount of heat applied to the second cap 320 and the inner surface of the exterior material 200 may be lower than the total amount of heat applied to the first cap 310 and the inner surface of the exterior material 200 in the step (S32) of thermally fusing the first cap 310 to the inner surface of the exterior material 200.

Meanwhile, the step (S30) of sealing the first exterior material opening 210 with the first cap 310 and the step (S40) of sealing the second exterior material opening 220 with the second cap 320 may be performed simultaneously or sequentially.

Specifically, the insertion of the first cap 310 into the first exterior material opening 210 and the insertion of the second cap 320 into the second exterior material opening 220 may be performed simultaneously or sequentially. Additionally, the fusion of the first cap 310 and the inner surface of the exterior material 200 and the fusion of the second cap 320 and the inner surface of the exterior material 200 may be performed simultaneously or sequentially.

Meanwhile, the method for manufacturing a secondary battery according to the first embodiment of the present disclosure may include a step (S50) of applying a curable resin to the outer surface of the portion of the exterior material 200 coupled to the first cap 310, which is performed after the step (S40) of sealing the second exterior material opening 220 with the second cap 320.

The resin applied along the outer surface of the portion of the exterior material 200 coupled to the first cap 310 may be cured after a certain period of time to apply pressure to the exterior material 200 and the first cap 310. In this case, the exterior material 200 is brought into close contact with the first cap 310 by the cured resin, and thus there is an advantageous effect of preventing the coupling between the exterior material 200 and the first cap 310 from being released even when the internal pressure of the secondary battery 10 increases.

Meanwhile, the method for manufacturing a secondary battery according to the first embodiment of the present disclosure may include a step (not shown) of fitting a pressure member 400 onto the outer surface of the portion of the exterior material 200 coupled to the first cap 310, which is performed after the step (S40) of sealing the second exterior material opening 220 with the second cap 320. The pressure member 400 is made of a metal material and may apply pressure to the exterior material 200 and the first cap 310. In this case, the exterior material 200 is brought into close contact with the first cap 310 by the pressure member 400, and thus there is an advantageous effect of preventing the coupling between the exterior material 200 and the first cap 310 from being released even when the internal pressure of the secondary battery 10 increases.

### Second embodiment

A method for manufacturing a secondary battery according to the second embodiment of the present disclosure differs from the first embodiment in that only one cap is coupled to the exterior material. Contents common to the first embodiment will be omitted as much as possible, and the second embodiment will be described focusing on the differences. That is, it is obvious that contents not described in the second embodiment may be regarded as contents of the first embodiment, if necessary.

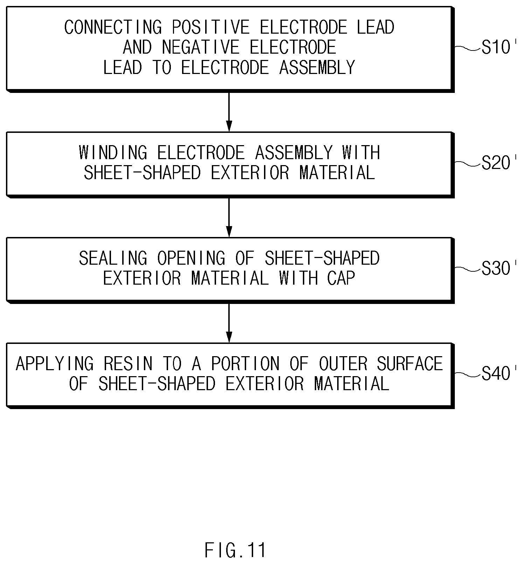

FIG. 11 is a flowchart sequentially showing a method for manufacturing a secondary battery according to a second embodiment of the present disclosure.

Referring to FIG. 11, a method for manufacturing a secondary battery according to the second embodiment of the present disclosure may include a step (S10') of coupling a positive electrode lead 110'and a negative electrode lead 120' to an electrode assembly 100'; a step (S20') of wrapping the electrode assembly 100' with a sheet-shaped exterior material to form an internal space S' accommodating the electrode assembly 100' and an exterior material opening 210' allowing the internal space S' to communicate with the outside; and a step (S30') of sealing the exterior material opening 210' with a cap 310'. At this time, the positive electrode lead 110' and the negative electrode lead 120' may be at least partially exposed to the outside by penetrating the cap 310', and only one exterior material opening 210' may be formed in the exterior material 200', and the cap 310' may be coupled to the inner surface of the portion of the exterior material 200' where the exterior material opening 210' is formed. Additionally, the bonding force between the cap 310' through which the positive electrode lead 110' and the negative electrode lead 120' pass and the inner surface of the exterior material 200' may be greater than or equal to 500 kPa. When the internal pressure of the exterior material 200' is greater than or equal to 500 kPa, the exterior material 200' formed of a laminate sheet may be broken, and since the bonding force between the cap 310' and the inner surface of the exterior material 200' is greater than or equal to 500 kPa, the coupling between the cap 310' and the exterior material 200' may not be released until the exterior material 200' is broken.

That is, according to the method for manufacturing a secondary battery according to the second embodiment of the present disclosure, venting may be prevented from occurring toward the cap 310' through which the positive electrode lead 110' and the negative electrode lead 120' pass. Therefore, it is possible to prevent the positive electrode lead 110' and the negative electrode lead 120' from being damaged even when the internal pressure of the secondary battery increases.

Meanwhile, the step (S30') of sealing the exterior material opening 210' with the cap 310' may include a step of inserting the cap 310' into the exterior material opening 210' and a step of thermally fusing the cap 310' to the inner surface of the exterior material 200'. In the step of thermally fusing the cap 310' to the inner surface of the exterior material 200', the cap 310' and the inner surface of the exterior material 200' may be heated and pressurized at a temperature range of 210 to 230°C for 3 to 10 seconds.

The method for manufacturing a secondary battery according to the second embodiment of the present disclosure may further include a step (S40') of applying a curable resin to the outer surface of the portion of the exterior material 200' coupled to the cap 310', which is performed after the step of sealing the exterior material opening 210' with the cap 310'. The resin applied along the outer surface of the portion of the exterior material 200' coupled to the cap 310' may be cured after a certain period of time to apply pressure to the exterior material 200' and the cap 310'. In this case, the exterior material 200' is brought into close contact with the cap 310' by the cured resin, and thus the coupling between the exterior material 200' and the cap 310' may be prevented from being released even when the internal pressure of the secondary battery 10' increases.

Alternatively, the method for manufacturing a secondary battery according to the second embodiment of the present disclosure may include a step (not shown) of fitting a pressure member 400' onto the outer surface of the portion of the exterior material 200' coupled to the cap 310', which is performed after the step of sealing the exterior material opening 210' with the cap 310'. The pressure member 400' is made of a metal material and may apply pressure to the exterior material 200' and the cap 310'. In this case, the exterior material 200' is brought into close contact with the cap 310' by the pressure member 400', and thus the coupling between the exterior material 200' and the cap 310' may be prevented from being released even when the internal pressure of the secondary battery 10' increases.

The present disclosure has been hereinabove described with regard to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

### [List of Reference Numerals]

10: Secondary battery
100: Electrode assembly
110: Positive electrode lead
120: Negative electrode lead
200: Exterior material
210: First exterior material opening
220: Second exterior material opening
310: First cap
311: First through hole
312: Second through hole
320: Second cap
400: Pressure member

## Claims

1. A secondary battery comprising:
an electrode assembly;
an exterior material having an internal space accommodating the electrode assembly and first and second exterior material openings allowing the internal space to communicate with the outside;
a first cap sealing the first exterior material opening;
a second cap sealing the second exterior material opening; and
a positive electrode lead and a negative electrode lead connected to the electrode assembly and at least partially exposed to the outside by penetrating the first cap,
wherein the first cap and the second cap are coupled to the inner surface of the exterior material, and the bonding force between the first cap and the inner surface of the exterior material is stronger than the bonding force between the second cap and the inner surface of the exterior material.

2. The secondary battery according to claim 1,
wherein the exterior material is formed by rolling or folding an exterior material sheet comprising a metal layer and a resin layer formed on both surfaces of the metal layer so that one end and the other end of the exterior material sheet meet each other.

3. The secondary battery according to claim 2,
wherein the one end and the other end of the exterior material sheet are bonded or fused to each other.

4. The secondary battery according to claim 1, further comprising:
a pressure member pressurizing the portion of the exterior material coupled to the first cap toward the first cap.

5. The secondary battery according to claim 4,
wherein the pressure member comprises:
a resin cured on the outer surface of the portion of the exterior material coupled to the first cap.

6. The secondary battery according to claim 1,
wherein the first cap comprises:
a body portion through which the positive electrode lead and the negative electrode lead pass; and
a gasket formed on the outer surface of the body portion and coupled to the exterior material.

7. The secondary battery according to claim 6,
wherein the gasket has a thickness of 0.5 mm or more, and
wherein the gasket is made of a PP material.

8. A secondary battery comprising:
an electrode assembly;
an exterior material having an internal space accommodating the electrode assembly and an exterior material opening allowing the internal space to communicate with the outside;
a cap sealing the exterior material opening; and
a positive electrode lead and a negative electrode lead connected to the electrode assembly and at least partially exposed to the outside by penetrating the cap,
wherein only one exterior material opening is formed in the exterior material, and the cap is coupled to the inner surface of the portion of the exterior material where the exterior material opening is formed.

9. The secondary battery according to claim 8, further comprising:
a pressure member pressurizing the portion of the exterior material coupled to the cap toward the cap.

10. The secondary battery according to claim 9,
wherein the pressure member comprises:
a resin cured on the outer surface of the portion of the exterior material coupled to the cap.

11. A method for manufacturing a secondary battery, comprising:
a step of coupling a positive electrode lead and a negative electrode lead to an electrode assembly;
a step of wrapping the electrode assembly with a sheet-shaped exterior material to form an internal space accommodating the electrode assembly and first and second exterior material openings allowing the internal space to communicate with the outside;
a step of sealing the first exterior material opening with a first cap; and
a step of sealing the second exterior material opening with a second cap,
wherein the positive electrode lead and the negative electrode lead are at least partially exposed to the outside by penetrating the first cap, and
wherein the sealing strength where the first cap seals the first exterior material opening is stronger than the sealing strength where the second cap seals the second exterior material opening.

12. The method for manufacturing a secondary battery according to claim 11,
wherein the step of sealing the first exterior material opening with the first cap comprises:
a step of inserting the first cap into the first exterior material opening; and
a step of thermally fusing the first cap to the inner surface of the exterior material.

13. The method for manufacturing a secondary battery according to claim 12,
wherein in the step of thermally fusing the first cap to the inner surface of the exterior material, the first cap and the inner surface of the exterior material are heated and pressurized at a temperature range of 210 to 230°C for 3 to 10 seconds.

14. The method for manufacturing a secondary battery according to claim 11,
wherein the step of sealing the second exterior material opening with the second cap comprises:
a step of inserting the second cap into the second exterior material opening; and
a step of thermally fusing the second cap to the inner surface of the exterior material.

15. The method for manufacturing a secondary battery according to claim 11,
wherein the step of sealing the first exterior material opening with the first cap and the step of sealing the second exterior material opening with the second cap are performed simultaneously or sequentially.

16. The method for manufacturing a secondary battery according to claim 11, further comprising:
a step of applying a curable resin to the outer surface of the portion of the exterior material coupled to the first cap, which is performed after the step of sealing the second exterior material opening with the second cap.

17. A method for manufacturing a secondary battery, comprising:
a step of coupling a positive electrode lead and a negative electrode lead to an electrode assembly;
a step of wrapping the electrode assembly with a sheet-shaped exterior material to form an internal space accommodating the electrode assembly and an exterior material opening allowing the internal space to communicate with the outside; and
a step of sealing the exterior material opening with a cap,
wherein the positive electrode lead and the negative electrode lead are at least partially exposed to the outside by penetrating the cap, and
wherein only one exterior material opening is formed in the exterior material, and the cap is coupled to the inner surface of the portion of the exterior material where the exterior material opening is formed.

18. The method for manufacturing a secondary battery according to claim 17,
wherein the step of sealing the exterior material opening with the cap comprises:
a step of inserting the cap into the exterior material opening; and
a step of thermally fusing the cap to the inner surface of the exterior material.

19. The method for manufacturing a secondary battery according to claim 18,
wherein in the step of thermally fusing the cap to the inner surface of the exterior material, the cap and the inner surface of the exterior material are heated and pressurized at a temperature range of 210 to 230°C for 3 to 10 seconds.

20. The method for manufacturing a secondary battery according to claim 17, further comprising:
a step of applying a curable resin to the outer surface of the portion of the exterior material coupled to the cap, which is performed after the step of sealing the exterior material opening with the cap.
